(19) Europäisches Patentamt
European Patent Office
Office européen des brevets

(11) Veröffentlichungsnummer: 0 422 439 A2

(12) # EUROPÄISCHE PATENTANMELDUNG

(21) Anmeldenummer: 90118356.6

(22) Anmeldetag: 25.09.90

(51) Int. Cl.5: C07F 9/40, C08G 79/04, C07F 9/6521, C08K 5/5353, C08G 2/30

(30) Priorität: 07.10.89 DE 3933549

(43) Veröffentlichungstag der Anmeldung: 17.04.91 Patentblatt 91/16

(84) Benannte Vertragsstaaten: BE CH DE ES FR GB IT LI NL

(71) Anmelder: BAYER AG
W-5090 Leverkusen 1 Bayerwerk(DE)

(72) Erfinder: Arndt, Uwe, Dr.
Malteserstrasse 85
W-5000 Koeln 40(DE)
Erfinder: Block, Hans-Dieter, Dr.
Biesenbach 49
W-5090 Leverkusen 3(DE)
Erfinder: Schulz-Schlitte, Wolfgang-Hans, Dr.
Wiedstrasse 2
W-4047 Dormagen 1(DE)

(54) **Neue Aminomethanphosphonsäurearylester, Verfahren zu ihrer Herstellung und ihre Verwendung.**

(57) Die Erfindung betrifft Aminomethanphosphonsäurearylester aliphatischer und aromatischer Amine und Polyamine, Verfahren zu ihrer Herstellung und ihre Verwendung als Flammschutzmittel sowie ihre Verwendung als cokondensierbare Komponente in Oligo- und Polykondensaten auf Basis Hydroxygruppen enthaltender Monomerer.

EP 0 422 439 A2

für eine gegebenenfalls substituierte Aminogruppe oder
für eine $-CH_2-OH$-Gruppe stehen kann,
n für eine ganze Zahl von 1 bis 100 steht,
$R^2$ für einen gegebenenfalls substituierten aromatischen Rest, einen gegebenenfalls substituierten heteroaromatischen Rest, für ein -H-Atom, für eine

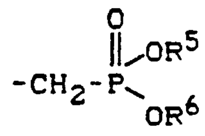 -Gruppe,

für eine 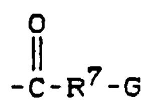 -Gruppe

oder für eine $-CH_2-OH$-Gruppe steht, $R^3$, $R^4$, $R^5$ und $R^6$ unabhängig voneinander für aromatische oder gegebenenfalls substituierte aromatische Reste stehen,
$R^7$ für ein -H-Atom, für einen gegebenenfalls substituierten aliphatischen Rest, für einen gegebenenfalls substituierten aromatischen Rest, für einen gegebenenfalls heteroaromatischen Rest, für eine gegebenenfalls substituierte Amino- oder Imino-Gruppe oder für einen über Sauerstoff oder Schwefel gebundenen gegebenenfalls substituierten aromatischen, heteroaromatischen oder aliphatischen Rest steht, gelöst.

Salze der Aminomethanphosphonsäurearylester der allgemeinen Formel (I) sind durch Quarternierung einzelner oder mehrerer Stickstoffatome durch alkylierende Substanzen, wie z.B. Alkyliodide, Alkylbromide oder Alkylchloride oder Phosphorigsäureester oder Phosphorsäureester oder Phosphonsäureester oder Phosphinsäureester niederer aliphatischer Alkohole, oder durch partielle Verseifung einzelner oder mehrerer Estergruppen und Neutralisation mit Basen wie Alkalihydroxiden und Aminen, erhältlich.

Als aromatische Reste können z.B. Phenylreste oder substituierte Phenylreste, wie z.B. die alkylsubstituierten isomeren Methyl- und Dimethylphenylreste, die isomeren Mono- und Diethylphenylreste, die isomeren Mono- und Diisopropylphenylreste, die isomeren Mono- und Di-tert.-butylphenylreste, i-Octylphenyl, Nonylphenyl, Phenylphenyl, Isopropylphenylphenyl, Dodecylphenyl, Methylenphenylphenyl, Isopropylidenphenylphenyl oder Cyclohexylphenyl, oder halogensubstituierte Phenylreste, wie z.B. die isomeren Mono- und Dichlorphenylreste, die isomeren Mono- und Dibromphenylreste, oder aminasubstituierte Phenylreste, wie z.B. Aminophenyl, oder gemischt substituierte Phenylreste, stehen.

Für den gegebenenfalls substituierten Alkylrest können die unsubstituierten und unverzweigten Alkylreste, wie Methyl, Ethyl, n-Propyl, n-Butyl usw. und ihre isomeren Formen, wie i-Propyl, i-Butyl, tert.-Butyl etc., stehen; für die substituierten Alkylreste können mono- und mehrfach hydroxysubstituierte unverzweigte und verzweigte Reste, wie z.B. der $-CH_2-OH$-Rest, der $-CH_2-CH_2-OH$-Rest, der $-CH_2-CH_2-CH_2-OH$-Rest, der $-CH_2-CH(OH)-CH_3$-Rest, der $-CH_2-CH(OH)-C_2H_5$-Rest, der $=CH_2-CH(OH)-CH_2-Cl$-Rest, mono- und mehrfach aminosubstituierte unverzweigte und verzweigte Reste, wie z.B. der $-CH_2-NH_2$-Rest, der $-CH_2-CH_2-NH_2$-Rest, der $-CH_2-CH_2-CH_2-NH_2$-Rest, der $-CH_2-CH(NH_2)-CH_3$-Rest sowie iminosubstituierte Reste und halogensubstituierte Alkylreste sowie gemischt substituierte Alkylreste stehen.

Gegenstand der Erfindung ist weiterhin ein Verfahren zur Herstellung von Aminomethanphosphonsäurearylester der allgemeinen Formel (I)

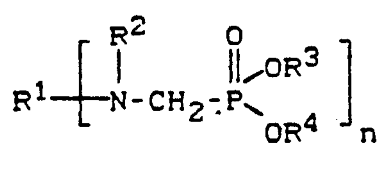 (I)

in der
R' für einen ein- oder mehrwertigen, gegebenenfalls substituierten, ein- oder mehrkernigen aromatischen Rest,
für einen ein- oder mehrwertigen, gegebenenfalls substituierten, ein- oder mehrkernigen heteroaromatischen Rest,
für einen ein- oder mehrwertigen, gegebenenfalls substituierten Arylenalkylenrest,

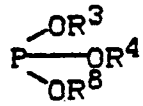

(III)

in der
$R^3$, $R^4$ und $R^8$ für gleiche oder verschiedene aromatische Reste stehen, in einem Molverhältnis von 0,01 bis 100 Mol-% bezogen auf vorliegende -N-H-Funktionen und mit Paraformaldehyd in einem Verhältnis von 100 bis 600 Mol-% Paraformaldehyd bezogen auf Triarylphosphit bei Temperaturen von 20 bis 300 °C.

Die anzuwendende Paraformaldehydmenge kann auch in Form von gasförmigem Formaldehyd zugeführt werden.

Besonders phosphorreiche Verbindungen können hergestellt werden, wenn als stickstoffhaltige Verbindung eine Verbindung mit mehr als einer -N-H-Funktion eingesetzt wird.

Besonders vorteilhaft verlaufen Reaktionen, bei denen das Triarylphosphit, bezogen auf alle vorliegenden N-H-Funktionen in unterstöchiometrischer Menge eingesetzt wird.

Bevorzugt werden die Umsetzungen so durchgeführt, daß die Reaktion bei Temperaturen zwischen 90 und 160 °C ausgeführt wird.

Verfahren, bei denen als Triarylphosphit Triphenylphosphit und als stickstoffhaltige Verbindung Harnstoff, Ethylendiamin, o-Phenylendiamin, m-Phenylendiamin, p-Phenylendiamin, Isopropylen-bis-p-phenylendiamin und ihre Derivate, Acrylsäureamid, Methacrylsäureamid, ihre Derivate und ihre oligomeren bis polymeren Addukte eingesetzt werden, sind besonders bevorzugt.

Die gegebenenfalls substituierte stickstoffhaltige Verbindung, das Triarylphosphit und der Paraformaldehyd können in einer einstufigen Reaktion umgesetzt werden.

Als besonders günstig hat sich eine Verfahrensvariante herausgestellt, bei der die gegebenenfalls substituierte stickstoffhaltige Verbindung und das Triarylphosphit vorgelegt werden und der Paraformaldehyd nachgeführt wird.

Als ebenfalls sehr günstig hat sich eine Verfahrensvariante herausgestellt, bei der die gegebenenfalls substituierte stickstoffhaltige Verbindung, das Triarylphosphit und der Paraformaldehyd kontinuierlich miteinander zur Reaktion gebracht werden.

Gegenstand der Erfindung sind weiterhin insbesondere Aminomethanphosphonsäurearylester der allgemeinen Formel (IV)

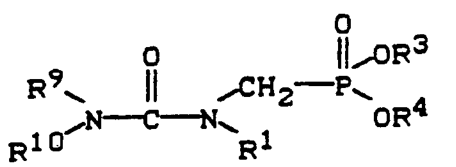

(IV)

in der
$R^1$, $R^3$ und $R^4$ die zuvor genannte Bedeutung haben und $R^9$ und $R^{10}$ unabhängig voneinander und von $R^1$ und $R^2$ die gleiche Bedeutung haben wie $R^1$ und ihre Salze sowie Aminomethanphosphonsäurearylester der allgemeinen Formel (V)

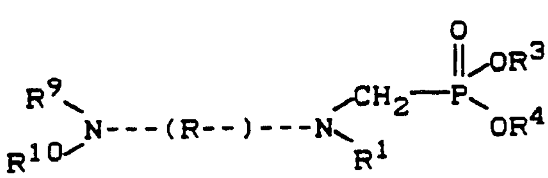

(V)

in der
$R^1$, $R^3$ und $R^4$ die zuvor genannte Bedeutung haben und $R^9$ und $R^{10}$ unabhängig voneinander und von $R^1$ und $R^2$ die gleiche Bedeutung haben wie $R^1$ und R ein Alkylen- oder Arylenrest ist, und ihre Salze.

Die erfindungsgemäßen Aminomethanphosphonsäurearylester eignen sich hervorragend als Flammschutzmittel in Schäumen, wie z.B. Polyurethanschäumen und Polyisocyanuratschäumen und Polycarbodiimidschäumen auf Basis von Isocyanaten oder Carbodiimiden, Thermoplasten, wie z.B. Polyethylenterephthalat, Polybutylenterephthalat, Polyamid 6, Polyamid 6,6, Polycarbonat, Polyvinylchlorid, Polyacrylnitril,

Durch Reaktion von 13,5 g (0,125 Mol) 1,4-Phenylendiamin, 77,5 g (0,25 Mol) Triphenylphosphit und 9 g (0,3 Mol) Paraformaldehyd nach angegebener Vorschrift und Abdestillieren von 31 g flüchtigen Produkten bei einer Temperatur von 15°C und einem Druck von 2 mbar werden 69 g Produkt entsprechend einer Ausbeute von 92 % mit einer Reinheit von 88 % hergestellt.

Beispiel 4 N,N′-Bis(diphenoxyphosphonomethyl)1,3-phenylendiamin

Durch Reaktion von 13,5 g (0,125 Mol) 1,3-Phenylendiamin, 77,5 g (0,25 Mol) Triphenylphosphit und 9 g (0,3 Mol) Paraformaldehyd nach angegebener Vorschrift und Abdestillieren von 32 g flüchtigen Produkten bei einer Temperatur von 150°C und einem Druck von 2 mbar werden 68 g Produkt entsprechend einer Ausbeute von 91 % mit einer Reinheit von 87 % hergestellt.

Beispiel 5 N,N′,N″-Tris(diphenoxyphosphonomethyl)melamin

Durch Reaktion von 31,5 g (0,25 Mol) Melamin, 232,5 g (0,75 Mol) Triphenylphosphit und 30,0 g (1,00 Mol) Paraformaldehyd nach angegebener Vorschrift und Abdestillieren von 78 g flüchtigen Produkten bei einer Temperatur von 150°C und einem Druck von 2 mbar werden 203 g Produkt entsprechend einer Ausbeute von 94 % mit einer Reinheit von 90 % (bestimmt durch $^{31}P$-NMR, Summe aller Isomeren) hergestellt.

Beispiel 6 N,N′-Bis(diphenoxyphosphonomethyl)1,2-diaminoethan

Durch Reaktion von 15 g (0,25 Mol) Ethylendiamin, 155 g (0,5 Mol) Triphenylphosphit und 20 g (0,66 Mol) Paraformaldehyd nach angegebener Vorschrift und Abdestillieren von 64 g flüchtigen Produkten bei einer Temperatur von 150°C und einem Druck von 2 mbar werden 126 g Produkt entsprechend einer Ausbeute von 91 % mit einer Reinheit von 90 % hergestellt.

Beispiel 7 N-Diphenoxyphosphonomethylacrylamid

Durch Reaktion von 35,5 g (0,5 Mol) Acrylamid, 155 g (0,5 Mol) Triphenylphosphit, 18 g (0,6 Mol) Paraformaldehyd und 2 g (0,02 Mol) p-Methoxyphenol als Stabilisator nach angegebener Vorschrift und Abdestillieren von 61,5 g flüchtigen Produkten bei einer Temperatur von 130°C und einem Druck von 2 mbar werden 149 g Produkt entsprechend einer Ausbeute von 94 % mit einer Reinheit von 72 % hergestellt.

## Ansprüche

1. Verfahren zur Herstellung von Aminomethanphosphonsäurearylester der allgemeinen Formel (I)

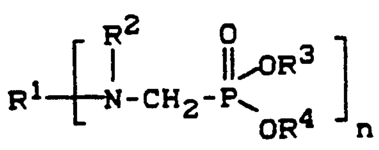

(I)

in der
$R^1$ für einen ein- oder mehrwertigen, gegebenenfalls substituierten, ein- oder mehrkernigen aromatischen Rest,
für einen ein- oder mehrwertigen, gegebenenfalls substituierten Arylenalkylenrest,
für einen gegebenenfalls substituierten aliphatischen Rest,
für ein -H-Atom,
für eine

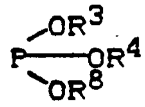

(III)

in der
$R^3$, $R^4$ und $R^8$ für gleiche oder verschiedene aromatische Reste stehen, in einem Molverhältnis von 0,01 bis 100 Mol-% bezogen auf vorliegende -N-H-Funktionen und mit Paraformaldehyd in einem Verhältnis von 100 bis 600 Mol-% Paraformaldehyd bezogen auf Triarylphosphit bei Temperaturen von 20 bis 300 °C umgesetzt wird.

2. Verfahren nach Anspruch 1, dadurch gekennzeichnet, daß als stickstoffhaltige Verbindung eine Verbindung mit mehr als einer -N-H-Funktion eingesetzt wird.

3. Verfahren nach einem der Ansprüche 1 und 2, dadurch gekennzeichnet, daß das Triarylphosphit bezogen auf alle vorliegenden N-H-Funktionen in unterstöchiometrischer Menge eingesetzt wird.

4. Verfahren nach einem der Ansprüche 1 bis 3, dadurch gekennzeichnet, daß die Reaktion bei Temperaturen zwischen 90 und 160 °C ausgeführt wird.

5. Verfahren nach einem der Ansprüche 1 bis 4, dadurch gekennzeichnet, daß als Triarylphosphit Triphenylphosphit eingesetzt wird.

6. Verfahren nach einem der Ansprüche 1 bis 5, dadurch gekennzeichnet, daß als stickstoffhaltige Verbindung Harnstoff, Ethylendiamin, o-Phenylendiamin, m-Phenylendiamin, p-Phenylendiamin, Isopropylen-bis-p-phenylendiamin und ihre Derivate, Acrylsäureamid, Methacrylsäureamid, ihre Derivate und ihre oligomeren bis polymeren Addukte eingesetzt werden.

7. Verfahren nach einem der Ansprüche 1 bis 6, dadurch gekennzeichnet, daß die gegebenenfalls substituierte stickstoffhaltige Verbindung, das Triarylphosphit und der Paraformaldehyd in einer einstufigen Reaktion umgesetzt werden.

8. Verfahren nach einem der Ansprüche 1 bis 7, dadurch gekennzeichnet, daß die gegebenenfalls substituierte stickstoffhaltige Verbindung und das Triarylphosphit vorgelegt werden und der Paraformaldehyd nachgeführt wird.

9. Verfahren nach einem der Ansprüche 1 bis 8, dadurch gekennzeichnet, daß die gegebenenfalls substituierte stickstoffhaltige Verbindung, das Triarylphosphit und der Paraformaldehyd kontinuierlich miteinander zur Reaktion gebracht werden.

10. Aminomethanphosphonsäurearylester der allgemeinen Formel (IV)

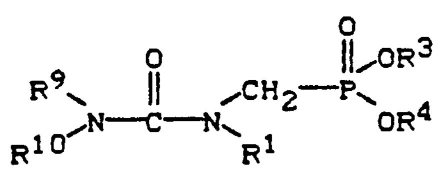

(IV)

in der
$R^1$, $R^3$ und $R^4$ die in Anspruch 1 genannte Bedeutung haben und
$R^9$ und $R^{10}$ unabhängig voneinander und von $R^1$ und $R^2$ die gleiche Bedeutung haben wie $R^1$ und ihre Salze.

11. Aminomethanphosphonsäurearylester der allgemeinen Formel (V)

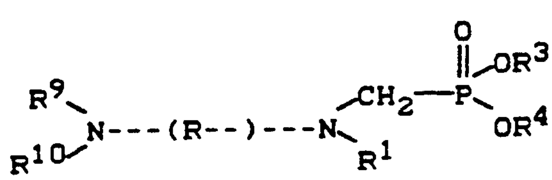

(V)

in der
$R^1$, $R^3$ und $R^4$ die in Anspruch 1 genannte Bedeutung haben und
$R^9$ und $R^{10}$ unabhängig voneinander und von $R^1$ und $R^2$ die gleiche Bedeutung haben wie $R^1$ und R ein Alkylen- oder Arylenrest ist, und ihre Salze.

12. Verwendung von Aminomethanphosphonsäurearylestern nach den Ansprüchen 10 und 11 als Flamm-

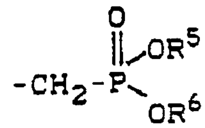 -Gruppe,

für eine

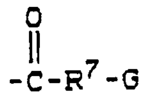-Gruppe oder für eine $-CH_2-OH$-Gruppe

steht,

$R^3$, $R^4$, $R^5$ und $R^6$ unabhängig voneinander für aromatische oder gegebenenfalls substituierte aromatische Reste stehen,

$R^7$ für ein -H-Atom, für einen gegebenenfalls substituierten aliphatischen Rest, für einen gegebenenfalls substituierten aromatischen Rest, für einen gegebenenfalls substituierten heteroaromatischen Rest, für eine gegebenenfalls substituierte Amino- oder Imino-Gruppe oder für einen über Sauerstoff oder Schwefel gebundenen gegebenenfalls substituierten aromatischen, heteroaromatischen oder aliphatischen Rest steht, dadurch gekennzeichnet, daß eine stickstoffhaltige Verbindung der allgemeinen Formel (II)

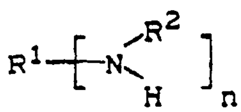 (II)

in der

$R^1$, $R^2$ und n die obengenannte Bedeutung besitzen, mit einem Triarylphosphit der allgemeinen Formel (III).

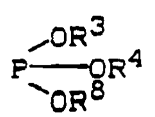 (III)

in der

$R^3$, $R^4$ und $R^8$ für gleiche oder verschiedene aromatische Reste stehen, in einem Molverhältnis von 0,01 bis 100 Mol-% bezogen auf vorliegende -N-H-Funktionen und mit Paraformaldehyd in einem Verhältnis von 100 bis 600 Mol-% Paraformaldehyd bezogen auf Triarylphosphit bei Temperaturen von 20 bis 300 °C umgesetzt wird.

2. Verfahren nach Anspruch 1, dadurch gekennzeichnet, daß als stickstoffhaltige Verbindung eine Verbindung mit mehr als einer -N-H-Funktion eingesetzt wird.

3. Verfahren nach einem der Ansprüche 1 und 2, dadurch gekennzeichnet, daß das Triarylphosphit bezogen auf alle vorliegenden N-H-Funktionen in unterstöchiometrischer Menge eingesetzt wird.

4. Verfahren nach einem der Ansprüche 1 bis 3, dadurch gekennzeichnet, daß die Reaktion bei Temperaturen zwischen 90 und 160 °C ausgeführt wird.

5. Verfahren nach einem der Ansprüche 1 bis 4, dadurch gekennzeichnet, daß als Triarylphosphit Triphenylphosphit eingesetzt wird.

6. Verfahren nach einem der Ansprüche 1 bis 5, dadurch gekennzeichnet, daß als stickstoffhaltige Verbindung Harnstoff, Ethylendiamin, o-Phenylendiamin, m-Phenylendiamin, p-Phenylendiamin, Isopropylen-bis-p-phenylendiamin und ihre Derivate, Acrylsäureamid, Methacrylsäureamid, ihre Derivate und ihre oligomeren bis polymeren Addukte eingesetzt werden.

7. Verfahren nach einem der Ansprüche 1 bis 6, dadurch gekennzeichnet, daß die gegebenenfalls substituierte stickstoffhaltige Verbindung, das Triarylphosphit und der Paraformaldehyd in einer einstufigen Reaktion umgesetzt werden.

8. Verfahren nach einem der Ansprüche 1 bis 7, dadurch gekennzeichnet, daß die gegebenenfalls substituierte stickstoffhaltige Verbindung und das Triarylphosphit vorgelegt werden und der Paraformaldeh-